# EUROPÄISCHE PATENTSCHRIFT

(11) **EP 1 019 689 B1**
(45) Veröffentlichungstag und Bekanntmachung des Hinweises auf die Patenterteilung: **17.12.2003**
(21) Anmeldenummer: 98955354.0
(22) Anmeldetag: 29.09.1998
(51) Int. Cl.: G01L 19/00, G01L 13/02, G01L 9/00

(54) **VERFAHREN ZUM BEFÜLLEN EINER MESSKAMMER EINES DRUCK- ODER DRUCKDIFFERENZ-MESSUMFORMERS MIT EINER DRUCKÜBERTRAGUNGSFLÜSSIGKEIT UND DRUCK- ODER DRUCKDIFFERENZ-MESSUMFORMER**
METHOD FOR FILLING THE MEASURING CHAMBER OF A TRANSDUCER MEASURING PRESSURE OR PRESSURE DIFFERENTIAL WITH A PRESSURE TRANSMISSION LIQUID AND A PRESSURE OR PRESSURE DIFFERENTIAL MEASURING TRANSDUCER
PROCEDE POUR REMPLIR UNE CHAMBRE DE MESURE D'UN TRANSDUCTEUR DE MESURE DE PRESSION OU DE DIFFERENCE DE PRESSION AVEC UN LIQUIDE DE TRANSMISSION DE PRESSION, ET TRANSDUCTEUR DE MESURE DE PRESSION OU DE DIFFERENCE DE PRESSION

(30) Priorität: 30.09.1997 DE 19744208
(43) Veröffentlichungstag der Anmeldung: 19.07.2000
(73) Patentinhaber: SIEMENS AKTIENGESELLSCHAFT, 80333 München (DE)
(72) Erfinder: ADOLF, Sven, D-13359 Berlin (DE); METSCHKE, Michael, D-12159 Berlin (DE)
(86) Internationale Anmeldenummer: DE9802886
(87) Internationale Veröffentlichungsnummer: WO99017088

(56) Entgegenhaltungen:
- DE-A- 2 038 868
- PATENT ABSTRACTS OF JAPAN vol. 014, no. 084 (P-1007), 16. Februar 1990 & JP 01 296122 A (MATSUSHITA ELECTRIC IND CO LTD), 29. November 1989
- PATENT ABSTRACTS OF JAPAN vol. 097, no. 008, 29. August 1997 & JP 09 101222 A (HITACHI LTD), 15. April 1997

## Beschreibung

Beispielsweise der DE-OS 43 08 718 läßt sich entnehmen, daß das Befüllen jeder der beiden Meßkammern eines Druckdifferenz-Meßumformers über einen Einfüllkanal erfolgt, nachdem die jeweilige Meßkammer evakuiert worden ist. Bei der Befüllung jeder Meßkammer mit der Druckübertragungsflüssigkeit ist darauf zu achten, daß in jede Meßkammer ein definiertes Volumen an Druckübertragungsflüssigkeit eingebracht ist. Das Befüllen jeder Meßkammer erfolgt mit einer unter Unterdruck. stehenden Druckübertragungsflüssigkeit unter Schwerkrafteinfluß. Danach wird jeder Einfüllkanal mittels einer Verschlußeinrichtung verschlossen, die mit einer Dichtungskugel auf eine Ringschneide am äußeren Ende des Einfüllkanals drückt. Die Dichtungskugel wird mittels eines Gewindestiftes gesichert.

Aus der DE-OS 20 38 868 ist ein weiterer Druckdifferenz-Meßumformer bekannt. Zum Befüllen einer Meßkammer mit Druckübertragungsflüssigkeit wird nach Lösen einer Nadelschraube unter Vakuum die Druckübertragungsflüssigkeit durch einen einen Stopfen durchsetzenden Kanal in die Meßkammer eingefüllt. Mit Hilfe des Stopfens, der seine Lage aufgrund seiner Schraubbarkeit ändern und mittels einer Mutter festgelegt werden kann, ist das Meßkammervolumen und somit die Menge der Druckübertragungsflüssigkeit einstellbar.

Der Erfindung liegt die Aufgabe zugrunde, ein Verfahren zum Befüllen einer Meßkammer eines Druck- oder Druckdifferenz-Meßumformers mit einer Druckübertragungsflüssigkeit anzugeben, das sich vergleichsweise einfach unter Erzielung einer sehr genau definierbaren Menge an Druckübertragungsflüssigkeit in jeder Meßkammer ausführen läßt.

Zur Lösung dieser Aufgabe wird erfindungsgemäß bei einem Verfahren zum Befüllen einer Meßkammer eines Druck- oder Druckdifferenz-Meßumformers mit einer Druckübertragungsflüssigkeit über einen Einfüllkanal ein über einen Teil seiner Längsgesamtlänge einen Längskanal aufweisender Füllstift zunächst soweit in den Einfüllkanal eingeführt, daß noch eine offene Verbindung der Meßkammer nach außen verbleibt; nach Evakuieren der Meßkammer wird die unter Unterdruck stehende Druckübertragungsflüssigkeit unter Schwerkrafteinfluß über den Längskanal und den Einfüllkanal in die Meßkammer eingebracht, und anschließend wird zum Herstellen eines definierten Arbeitsvolumens an Druckübertragungsflüsssigkeit in der Meßkammer eine Ergänzungsmenge an Druckübertragungsflüssigkeit durch Einpressen des Füllstiftes über das Ende seines Längskanäls hinaus eingefüllt.

Ein wesentlicher Vorteil des erfindungsgemäßen Verfahrens besteht darin, daß mit ihm eine sehr genau dosierbare Menge an Druckübertragungsflüssigkeit in die jeweilige Meßkammer einbringbar ist. Dies beruht darauf, daß der Füllstift gewissermaßen nach Art eines Kolbens wirkt, indem er nach dem Einbringen der Druckübertragungsflüssigkeit unter Schwerkraft mit seinem Einpressen eine genau definierte Zusatzmenge an Übertragungsflüssigkeit in die Meßkammer "nachschiebt". Dabei ist durch die Ausgestaltung des Füllstiftes mit einem Längskanal und seiner Anbringung an dem jeweiligen Meßumformer in der Weise, daß noch eine offene Verbindung der Meßkammer nach außen verbleibt, dafür Sorge getragen, daß das Evakuieren und das anschließende Einbringen von Druckübertragungsflüssigkeit unter Schwerkrafteinfluß nicht behindert ist. Es sind somit in vorteilhafter Weise bei dem erfindungsgemäßen Verfahren - bis auf das abschließende Einpressen des Füllstiftes - keine zusätzlichen Verfahrensschritte erforderlich, um nach dem Einbringen der Druckübertragungsflüssigkeit unter Schwerkrafteinfluß eine zusätzliche Menge an Druckübertragungsflüssigkeit in definiertem Umfange einzubringen.

Bei dem erfindungsgemäßen Verfahren kann der Füllstift in unterschiedlicher Weise im Bereich des Einfüllkanals gesichert sein. Als besonders vorteilhaft wird es aus fertigungs- und sicherungstechnischen Gründen aber angesehen, wenn der Füllstift nach dem Einpressen durch eine Schweißnaht gesichert wird.

Das Einpressen des Füllstiftes erfolgt vorteilhafterweise bündig bis zum äußeren Ende des Einfüllkanals, weil dadurch ein Nacharbeiten außen am Einfüllkanal nicht erforderlich ist.

Um bei dem erfindungsgemäßen Verfahren beim Einpressen des Füllstiftes zuverlässig ein definiertes Volumen an Druckübertragungsflüssigkeit "nachschieben" zu können, ist der Einfüllkanal vor dem Einbringen des Füllstiftes vorteilhafterweise mit einer Dichtungslippe versehen.

Die Erfindung ist ferner auf einen Druck- oder Druckdifferenz-Meßumformer mit mindestens einer Meßkammer gerichtet, die über einen Einfüllkanal mit einer Druckübertragungsflüssigkeit befüllbar ist, und die eine Verschlußeinrichtung am äußeren Ende des Einfüllkanals aufweist; ein derartiger Druck- oder Druckdifferenz-Meßumformer ist aus der eingangs angegebenen Offenlegungsschrift bekannt.

Um einen solchen Druck- oder Druckdifferenz-Meßumformer in seiner Meßkammer oder seinen Meßkammern mit einer definierten Menge an Druckübertragungsflüssigkeit befüllen zu können, besteht erfindungsgemäß die Verschlußeinrichtung aus einem Füllstift mit einem Längskanal über einen Teil seiner Gesamtlänge, der aus einer eine Öffnung zur Meßkammer freilassenden Stellung nach Befüllung in den Einfüllkanal eingepreßt ist.

Der wesentliche Vorteil des erfindungsgemäßen Meßumformers besteht darin, daß er verhältnismäßig einfach hinsichtlich der notwendigen Befüllung mit der Druckübertragungsflüssigkeit hergestellt werden kann und außerdem in seinen Meßkammern eine genau dosierte Menge an Druckübertragungsflüssigkeit enthält.

Bei dem erfindungsgemäßen Druck- oder Druckdifferenz-Meßumformer kann der Stift hinsichtlich der Ausgestaltung seines Längskanals unterschiedlich ausgebildet sein. Als besonders vorteilhaft wird es angesehen, wenn der Längskanal des Stiftes von einer achsparallelen äußeren Abflachung des Stiftes gebildet ist.

Bei einer anderen vorteilhaften Ausgestaltung des Stiftes hinsichtlich seines Längskanals ist der Längskanal von einem achsparallelen Schlitz im Stift gebildet.

Zur Erläuterung der Erfindung ist in
- Figur 1: ein Schnitt durch ein nach dem erfindungsgemäßen Verfahren hergestellten Druckdifferenz-Meßumformer, in
- Figur 2: die Einzelheit A nach Figur 1 bei einem zunächst eingesetzten Stift, in
- Figur 3: die Einzeilheit B mit eingepreßtem Füllstift, in
- Figur 4: ein Schnitt durch ein Ausführungsbeispiel eines bei dem erfindungsgemäßen Verfahren in vorteilhafter Weise benutzbaren Füllstiftes und in
- Figur 5: ein weiteres Ausführungsbeispiel eines Füllstiftes gezeigt.

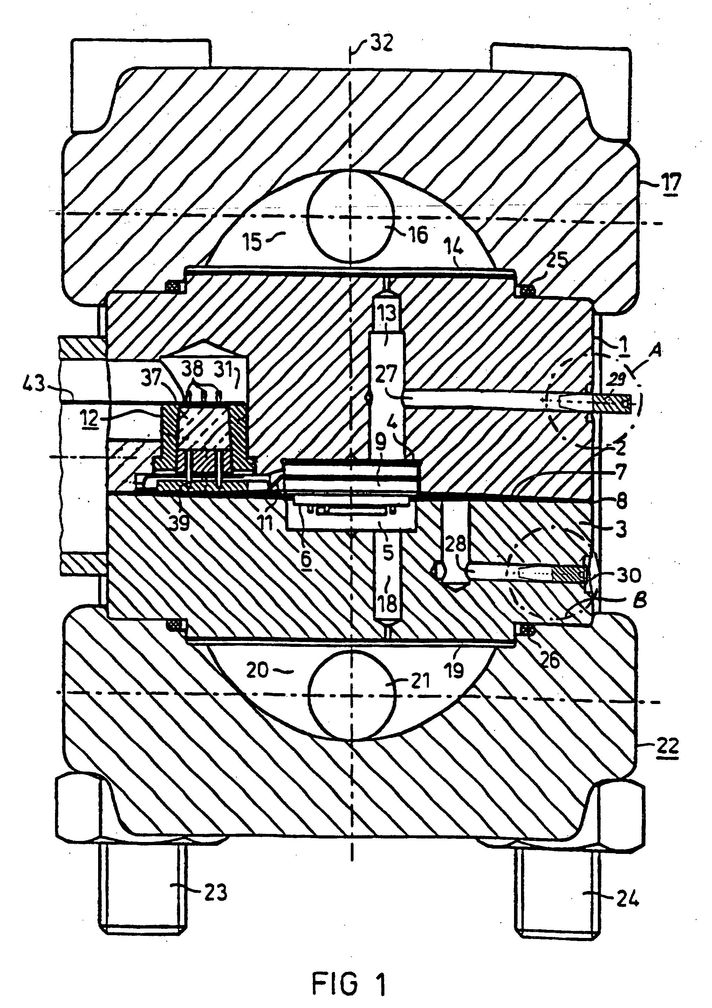

Der in Figur 1 dargestellte Druckdifferenz-Meßumformer weist ein Innengehäuse 1 auf, das ein in der Figur oberes Gehäuseteil 2 und ein anderes (in der Figur unteres) Gehäuseteil 3 enthält. Das eine Gehäuseteil 2 weist eine zentrale Ausnehmung 4 auf; auch das andere Gehäuseteil 3 ist mit einer zentralen Ausnehmung 5 versehen. In dem von den zentralen Ausnehmungen 4 und 5 gebildeten Hohlraum befindet sich ein Drucksensor 6, der auf einer Mittenmembran 7 befestigt ist. Die Mittenmembran 7 ist zwischen den Gehäuseteilen 2 und 3 des Innengehäuses 1 am äußeren Rand 8 in bekannter Weise durch Schweißen eingespannt. Der Drucksensor 6 ist mit seinen elektrischen Anschlüssen über eine bandförmige Leiterfolie 11 mit einer elektrischen Durchführung 12 verbunden.

Die zentrale Ausnehmung 4 des einen Gehäuseteils 2 ist über einen inneren Kanal 13 in bekannter Weise über eine Trennmembran 14 mit einer Vorkammer 15 druckleitend verbunden. Die Vorkammer 15 wird von einer Ausnehmung in einer äußeren Gehäusekappe 17 gebildet.

Entsprechend ist die zentrale Ausnehmung 5 des anderen Gehäuseteiles 3 über einen weiteren inneren Kanal 18 und eine weitere Trennmembran 19 druckleitend mit einer weiteren Vorkammer 20 verbunden. Die Vorkammer 20 ist von einer weiteren Gehäusekappe 22 gebildet, die über Spannschrauben 23 und 24 mit der anderen Gehäusekappe 17 unter Zwischenlegung von 0-Ringen 25 und 26 verspannt ist.

Innerhalb der inneren Kanäle 13 und 18 der beiden Gehäuseteile 2 und 3 befindet sich in bekannter Weise eine Druckübertragungsflüssigkeit, z. B. Öl, das über Einfüllkanäle 27 und 28 in bekannter Weise eingefüllt wird; diese Einfüllkanäle 27 und 28 werden anschließend durch Füllstifte 29 und 30 dicht verschlossen.

Wie die Figur 1 ferner erkennen läßt, weist das eine Gehäuseteil 2 eine Bohrung 31 parallel zur Längsachse 32 des Drückdifferenz-Meßumformers auf. Diese Bohrung 31 ist mit der elektrischen Durchführung 12 nach außen verschlossen.

Die elektrische Durchführung 12 enthält in einem Glaskörper 37 eingebettet elektrische Kontaktstifte 38, die auf beiden Seiten aus der elektrischen Durchführung 12 hervorstehen. Deshalb besteht die Möglichkeit, die in der Figur 1 unteren Enden 39 der Kontaktstifte 38 mit der bandförmigen Leiterfolie 11 zu verbinden. An ihrem in der Figur 1 oberen Ende sind die Kontaktstifte 38 ebenfalls mit den Leiterbahnen auf einer weiteren bandförmigen Leiterfolie 43 durch Löten verbunden.

Der innere Kanal 13 des einen Gehäuseteils 2 bildet mit der einen zentralen Ausnehmung 4 am Drucksensor 6, mit dem Raum unterhalb der Trennmembran 14 und einem Einfüllkanal 27 eine Meßkammer, die im fertig montierten Zustand des dargestellten Druckdifferenz-Meßumformers insgesamt mit der Druckübertragungsflüssigkeit gefüllt ist. Das Füllen geschieht bei dem gezeigten Meßumformer in der Weise, daß in den Einfüllkanal 27 der Füllstift 29 (vgl. auch Figur 2) zunächst soweit eingesetzt wird, daß ein von einem Schlitz 51 des Füllstiftes 29 (siehe Figur 4) gebildeter Längskanal noch eine offene Verbindung der Meßkammer nach außen gewährleistet. Danach erfolgt über diese offene Verbindung ein Evakuieren der Meßkammer und anschließend das Befüllen mit der Druckübertragungsflüssigkeit; letztere steht dabei unter Unterdruck und läuft unter Schwerkraft in die Meßkammer, wenn die zusammengefügten Gehäuseteile 2 und 3 um 90° zur dargestellten Lage gedreht angeordnet sind.

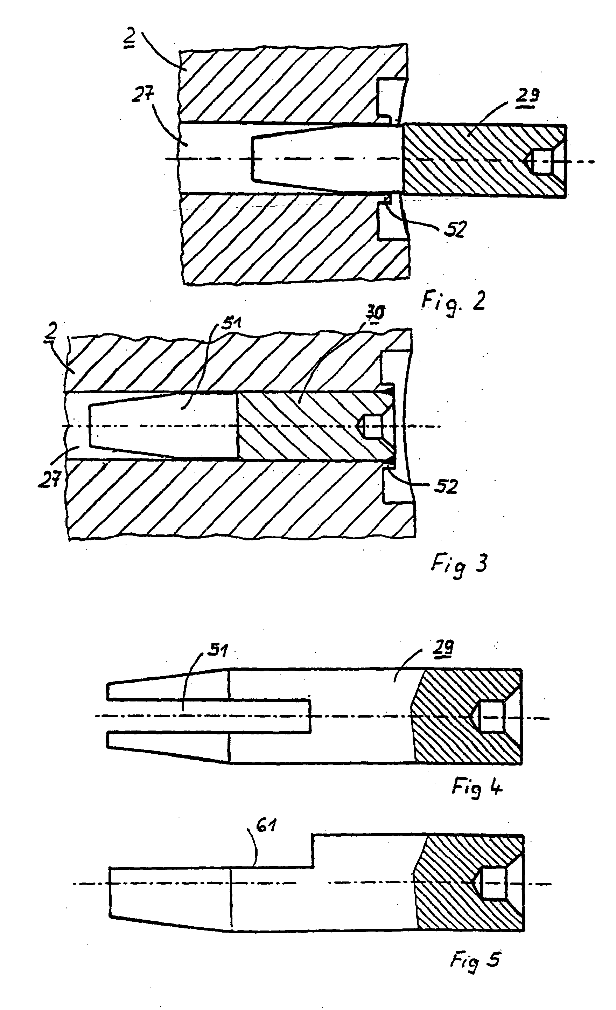

Nach dem Befüllen wird der Füllstift 29 aus der mit der Einzelheit A bzw. Figur 2 gezeigten Lage unter Ausüben einer Kolbenwirkung in das Gehäuseteil 2 bzw. 3 eingepreßt und nimmt dann eine Lage ein, wie sie als Einzelheit B in Figur 3 anhand des anderen Füllstiftes 30 gezeigt ist. Dabei sorgt eine Dichtungslippe 52 am äußeren Ende des Einfüllkanals 27 dafür, daß beim Einpressen keine Druckübertragungsflüssigkeit nach außen austritt. Es wird also ein definiertes Volumen an Druckübertragungsflüssigkeit nachgeschoben, weil der Füllstift gewissermaßen eine Kolbenwirkung ausübt und ein durch sein eingepreßtes Volumen vorgegebene Menge an Druckübertragungsflüssigkeit in die Meßkammer verdrängt, wodurch in dieser die definierte Menge einer Druckübertragungsflüssigkeit erreicht wird. Der eingepreßte Füllstift 29 bzw. 30 wird beispielsweise durch Laserstrahlschweißen arretiert und der Einfüllkanal damit auch zuverlässig nach außen abgedichtet.

Die Figur 5 zeigt eine andere Ausführungsform des Füllstiftes, bei der ein Längskanal mittels einer achsparallelen Abflachung 61 gebildet ist.

## Patentansprüche

1. Verfahren zum Befüllen einer Meßkammer (4, 13, 27) eines Druck- oder Druckdifferenz-Meßumformers mit einer Druckübertragungsflüssigkeit über einen Einfüllkanal (27), bei dem
- ein über einen Teil seiner Gesamtlänge einen Längskanal (51) aufweisender Füllstift (29) zunächst soweit in den Einfüllkanal (27) eingeführt wird, daß noch eine offene Verbindung der Meßkammer (4, 13, 27) nach außen verbleibt,
- nach Evakuieren der Meßkammer (4, 13, 27) die unter Unterdruck stehende Druckübertragungsflüssigkeit unter Schwerkrafteinfluß über den Längskanal (51) und den Einfüllkanal (27) in die Meßkammer (4, 13, 27) eingebracht wird und
- anschließend zum Herstellen eines definierten Arbeitsvolumens an Druckübertragungsflüssigkeit in der Meßkammer (4, 13, 27) eine Ergänzungsmenge an Druckübertragungsflüssigkeit durch Einpressen des Füllstiftes (29) Über das Ende seines Längskanals (51) hinaus eingefüllt wird.

2. Verfahren nach Anspruch 1,
**dadurch gekennzeichnet, daß**
- der Füllstift (29) nach dem Einpressen durch eine Schweißnaht gesichert wird.

3. Verfahren nach Anspruch 1 oder 2,
**dadurch gekennzeichnet, daß**
- der Füllstift (29) bündig bis zum äußeren Ende des Einfüllkanals eingepreßt wird.

4. Verfahren nach einem der vorangehenden Ansprüche,
**dadurch gekennzeichnet, daß**
- der Einfüllkanal (27) vor dem Einbringen des Füllstiftes (29) mit einer Dichtungslippe (52) versehen wird.

5. Druck- oder Druckdifferenz-Meßumformer mit mindestens einer Meßkammer (4, 13, 27), die über einen Einfüllkanal (27) mit einer Druckübertragungsflüssigkeit befüllbar ist und mit einer Verschlußeinrichtung (29) am äußeren Ende des Einfüllkanals (27),
**dadurch gekennzeichnet, daß**
- die Verschlußeinrichtung aus einem Füllstift (29) mit einem Längskanal (51) über einen Teil seiner Gesamtlänge besteht, der aus einer eine Öffnung zur Meßkammer (4, 13, 27) freilassenden Stellung nach Befüllung in den Einfüllkanal (27) eingepreßt ist.

6. Meßumformer nach Anspruch 5,
**dadurch gekennzeichnet, daß**
- der Längskanal des Stiftes (29) von einer achsparallelen äußeren Abflachung (61) des Stiftes gebildet ist.

7. Meßumformer nach Anspruch 5,
**dadurch gekennzeichnet, daß**
- der Längskanal von einem achsparallelen Schlitz (51) im Stift (29) gebildet ist.

## Claims

1. Method for filling a measuring chamber (4, 13, 27) of a pressure or pressure differential measuring transducer with a pressure transmission fluid via a filling channel (27), in which
- a filling pin (29) having a longitudinal channel (51) over part of its overall length is first inserted into the filling channel (27) to such an extent that an open connection of the measuring chamber (4, 13, 27) to the outside still remains,
- after evacuation of the measuring chamber (4, 13, 27) the pressure transmission fluid, which is under vacuum, is fed into the measuring chamber (4, 13, 27) under the influence of gravity via the longitudinal channel (51) and the filling channel (27) and
- then to produce a defined operating volume of pressure transmission fluid in the measuring chamber (4, 13, 27), the measuring chamber is filled with a supplementary quantity of pressure transmission fluid by pressing in the filling pin (29) beyond the end of its longitudinal channel (51).

2. Method according to claim 1, **characterised in that**
- the filling pin (29) is secured by a weld seam after being pressed in.

3. Method according to claim 1 or 2, **characterised in that**
- the filling pin (29) is pressed in flush up to the outer end of the filling channel.

4. Method according to one of the preceding claims, **characterised in that**
- the filling channel (27) is provided with a sealing lip (52) before the filling pin (29) is inserted.

5. Pressure or pressure differential measuring transducer with at least one measuring chamber (4, 13, 27), which can be filled with a pressure transmission fluid via a filling channel (27) and with a shut-off device (29) at the outer end of the filling channel (27), **characterised in that**
- the shut-off device consists of a filling pin (29) with a longitudinal channel (51) over part of its overall length, which after filling is pressed out of a position releasing an orifice to the measuring chamber (4, 13, 27) into the filling channel (27).

6. Measuring transducer according to claim 5, **characterised in that**
- the longitudinal channel of the pin (29) is formed by an outer flattened area (61) of the pin, which is parallel to the axis.

7. Measuring transducer according to claim 5, **characterised in that**
- the longitudinal channel is formed by a slit (51) in the pin (29), which is parallel to the axis.

## Revendications

1. Procédé de remplissage d'une chambre (4 ,13, 27) de mesure d'un transducteur de mesure de la pression ou d'une différence de pression d'un liquide de transmission de la pression par un canal (27) de remplissage, dans lequel
- on introduit sur une partie de sa longueur totale une broche (29) de remplissage ayant un canal (51 ) longitudinal d'abord si loin dans le canal (27) de remplissage qu'il subsiste encore une communication de la chambre (4, 13, 27) de mesure ouverte vers l'extérieur,
- après avoir fait le vide dans la chambre (4, 13, 27) de mesure, on introduit le liquide de transmission de la pression qui est sous dépression sous l'influence de la force de gravité dans la chambre (4, 13, 27) de mesure par le canal (51) longitudinal et par le canal (27) de remplissage et
- ensuite pour produire un volume de travail défini de liquide de transmission de la pression dans la chambre (4, 13, 27) de mesure, on introduit une quantité complémentaire de liquide de transmission de la pression en enfonçant la broche (29) de remplissage au-delà de l'extrémité de son canal (51 ) longitudinal.

2. Procédé suivant la revendication 1, **caractérisé, en ce que**
- on bloque la broche (29) de remplissage après l'enfoncement par un cordon de soudure.

3. Procédé suivant la revendication 1 ou 2, **caractérisé en ce que**
- on enfonce la broche (29) de remplissage jusqu'à affleurement avec l'extrémité extérieure du canal de remplissage.

4. Procédé suivant l'une des revendications précédentes,
**caractérisé en ce que**
- on munit le canal (27) de remplissage d'une lèvre (52) d'étanchéité avant l'introduction de la broche (29) de remplissage.

5. Transducteur de mesure de la pression ou d'une différence de pression, comprenant au moins une chambre (4, 13, 27) de mesure qui peut être emplie par un canal (27) de remplissage d'un liquide de transmission de la pression et comprenant un dispositif (29) de fermeture à l'extrémité extérieure du canal (27) de remplissage,
**caractérisé en ce que**
- le dispositif de fermeture est constitué d'une broche (29) de remplissage ayant un canal (51) longitudinal sur une partie de toute sa longueur qui, à partir d'une position laissant dégager une ouverture menant à la chambre (4, 13, 27) de mesure, est enfoncée après remplissage dans le canal (27) de remplissage.

6. Transducteur de mesure suivant la revendication 5,
**caractérisé en ce que**
- le canal longitudinal de la broche (29) est formé par un méplat (61) extérieur parallèle à l'axe de la broche.

7. Transducteur de mesure suivant la revendication 5,
**caractérisé en ce que**
- le canal longitudinal est formé d'une fente (51) parallèle à l'axe ménagé dans la broche (29).
